# EUROPEAN PATENT SPECIFICATION

(11) **EP 1 738 427 B1**
(45) Date of publication and mention of the grant of the patent: **27.07.2011**
(21) Application number: 05724709.0
(22) Date of filing: 04.03.2005
(51) Int. Cl.: H01M 2/14, H01M 2/18

(54) **FUEL CELL REACTANT FLOW FIELDS THAT MAXIMIZE PLANFORM UTILIZATION**
BRENNSTOFFZELLEN-REAKTIONSMITTEL-STRÖMUNGSFELDER ZUR MAXIMIERUNG DER PLANFORM-AUSNUTZUNG
CHAMPS DE FLUX DE REACTIF DE PILES A COMBUSTIBLE PERMETTANT DE MAXIMISER L'UTILISATION D'UNE FORME PLANE

(30) Priority: 01.04.2004 US 816403
(43) Date of publication of application: 03.01.2007
(73) Proprietor: UTC Fuel Cells, LLC, South Windsor, CT 06074 (US)
(72) Inventor: GUTHRIE, Robin, J., East Hartford, CT 06118 (US)
(74) Representative: Klunker . Schmitt-Nilson . Hirsch
(86) International application number: PCT/US2005/007220
(87) International publication number: WO 2005/104281

(56) References cited:
- EP-A- 0 940 868
- EP-A- 1 047 143
- US-A- 5 300 370
- US-A1- 2004 023 102
- US-B1- 6 255 011

## Description

### Technical Field

This invention relates to fuel cell flow fields that have transverse portions so as to clear internal manifold holes or an external inlet for an external fluid manifold, having extra grooves in the transverse portion of the flow field, thereby to provide flow field over a maximal amount of the fuel cell planform.

### Background Art

Reactant gas and oxidant gas flow fields in modem fuel cells comprise channels consisting of grooves machined or otherwise formed in the surface of one side of a bipolar plate, metal/or carbonaceous plate, variously called a reactant gas flow field plate, or water transport plate (if it is porous and separates water flow from reactant gas flow by means of bubble pressure). The planform of the cells is typically rectangular, with about a two-to-one aspect ratio. The active fuel cell area, where the fuel reacts with the oxidant at an electrolyte, can exist only where the opposing reactant flow fields are in each other's shadow, on opposite sides of the electrolyte. The unproductive areas are not only created as a result of the shape of the flow field on one reactant gas plate, but additional unproductive areas are created by the shape of flow field on the other reactant flow field plate.

To provide internal manifolds, such as to convey coolant into and out of the cells, each plate has a hole which aligns with similar holes in adjacent plates. In fuel cells with only external inlet/outlet manifolds, porting is required to separate the inlet flow from the outlet flow. The porting areas, holes, and surrounding plate material required to seal internal manifolds from reactant gas flow fields, occupy space that otherwise would contain grooves.

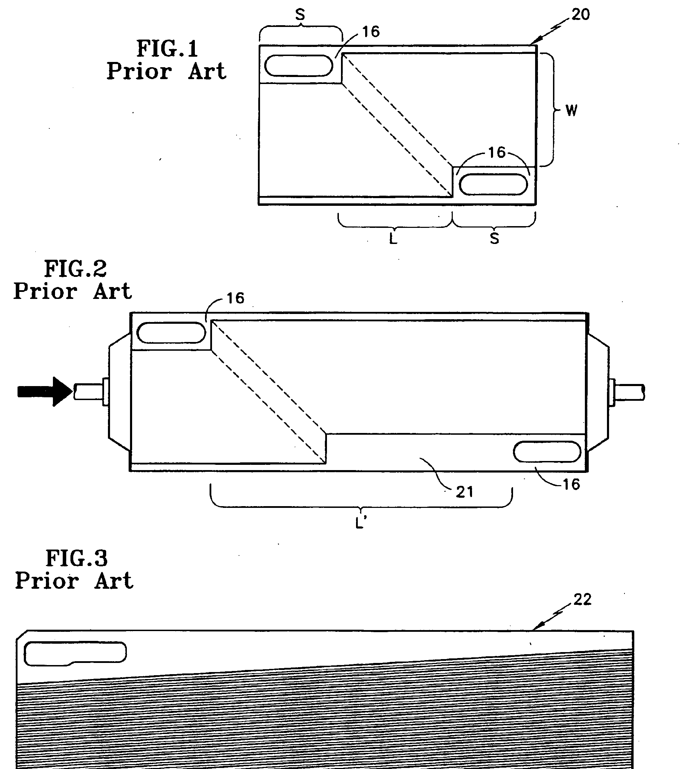

As seen in Fig. 1, as long as the length, L, of the flow field minus the lengths, S, of any internal manifold seal areas 16 is the same as the width, W, of the flow field, then the entire available planform of the reactant gas flow field plate 20 is productively utilized.

However, as seen in Fig. 2, when the length, L', of the flow field minus the lengths, S, of any manifold seal areas, is different from the width, then there inherently is a non-productive area 21 of the planform.

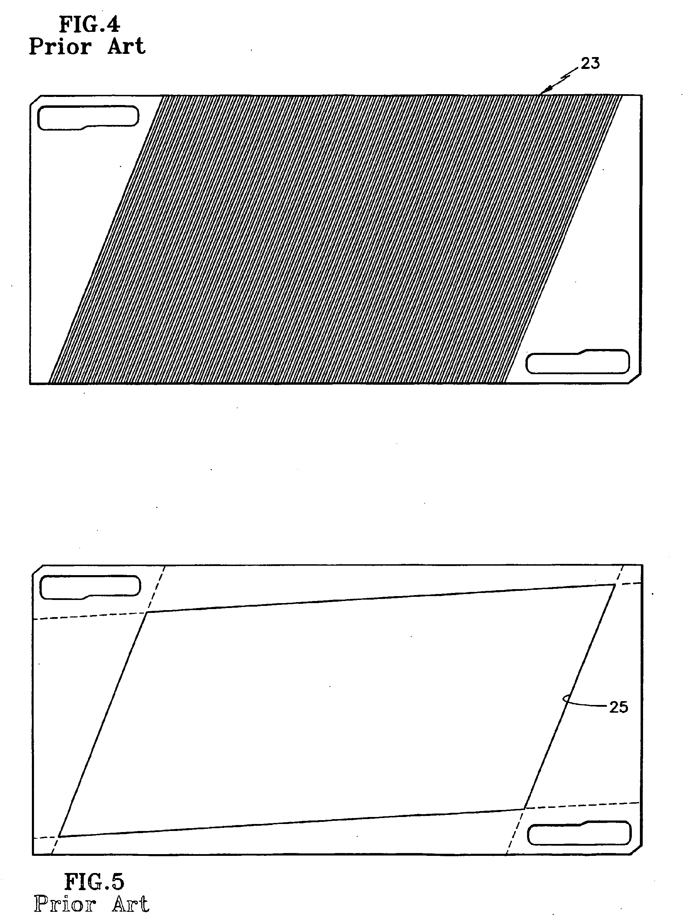

Consider matching a fuel flow field plate 22 of the type illustrated in Fig. 3 with a similarly arranged, but orthogonally flowing oxidant flow fuel plate 23 as shown in Fig. 4. The active area would be limited, as illustrated in Fig. 5, to a parallelogram 25 which encompasses both the fuel reactant gas channels in the fuel reactant gas flow field plate of Fig. 3 and the oxidant reactant gas channels in the oxidant reactant gas flow field plate of Fig. 4.

### Disclosure of Invention

Objects of the invention include: maximizing the useful (active) portion of the planform of a fuel cell having internal manifolds; providing reactant flow fields, the flow inlet edges of which are offset from the flow outlet edges thereof in order to provide space for internal manifold holes and external manifold porting, which nonetheless do not leave unnecessarily unusable portions of the planform as a result of the offset; and provision of reactant gas flow fields which permit having an active area that includes all of the planform not required for internal manifolds, porting, or seals. The object is solved by the fuel cell reactant gas flow field plate as claimed in claim 1. Embodiments of the invention are claimed in the dependent claims.

This invention is predicated on my discovery that fuel cell reactant gas flow field plates having inlets offset from outlets will have little waste (inactive) area if the transverse channels have as many grooves per channel as the aspect ratio between the length/width of the transverse flow field area to the width/length of the transverse flow field area.

According to the present invention, in a fuel cell reactant gas flow field plate having channels with inlets which are offset from the outlets of such channels by means of transverse channels, the ratio of the number of transverse grooves per channel is on the order of the aspect ratio of the transverse area; that is, the ratio of the length to the width or the ratio of the width to the length, whichever is greater.

Other objects, features and advantages of the present invention will become more apparent in the light of the following detailed description of exemplary embodiments thereof, as illustrated in the accompanying drawing.

### Brief Description of the Drawings

Fig. 1 is a simplified top plan view of a fuel cell fuel reactant gas flow field plate having flow channels with inlets which are offset from their outlets, in which the aspect ratio of the transverse flow field area is unity (the width is equal to the length) and in which the width of the flow field W is equal to the flow field minus the lengths of any internal seal areas, which might be known to the prior art.
Fig. 2 is similar to Fig. 1 but the length of the flow field minus the lengths of the internal manifold seal areas is much greater than the width of the flow field, resulting in non-productive area.
Fig. 3 is similar to Fig. 2 but with straight flow fields set at an angle compared to the edge of the flow field, which might be known to the prior art.
Fig. 4 is similar to Fig. 3 but showing flow fields transverse to those of Fig. 3, to provide a flow field plate which could be used in conjunction with the flow field plate of Fig. 3 to form a fuel cell.
Fig. 5 illustrates the limited productive area of a fuel cell formed utilizing the plates of Figs. 3 and 4 on opposite sides of an electrolyte, which might be known to the prior art.
Fig. 6 is a top plan view of a reactant gas flow field plate having flow channels with inlets offset from their outlets and employing the present invention so as to maximize productive area of the plate.
Fig. 7 is a fragmentary exploded view of the flow field of Fig. 6.
Fig. 8 is a top plan view of an oxidant reactant flow field plate having a general flow direction transverse to the flow direction of the flow field plate of Fig. 6, employing the present invention, so as to avoid wasting any of the planform.
Fig. 9 is a fragmentary exploded view of a portion of Fig. 8.
Fig. 10 is a fragmentary top plan view of the invention being practiced in an interdigitated reactant gas flow field plate.
Fig. 11 is a top plan view of a reactant gas flow field plate having inlet and outlet flow fields separated by porting areas.

### Mode(s) for Carrying Out the Invention

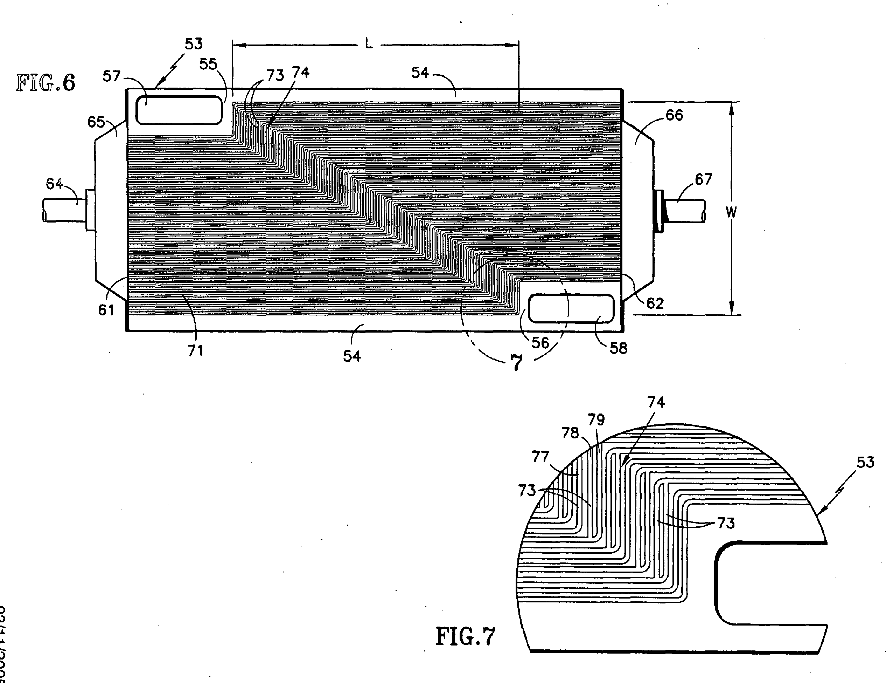

Referring to Figs. 6 and 7, a reactant gas flow field plate 53 has seal areas 54 along edges and seal areas 55, 56 surrounding internal manifold holes 57, 58. The flow field plate has an inlet end 61 and an outlet end 62. Reactant gas is provided from a pipe 64 through an inlet manifold 65 and is passed from the flow field through an exit manifold 66 to an exhaust and/or recycle pipe 67.

The inlet ends 61 of the fuel channels 71 are offset from the outlet ends 62 of the fuel channels 71. The offset is created by transverse portions 73 which together make up a parallelogram-shaped flow field transverse area 74. The transverse channels 73 may have either one groove 77 or two grooves 78, 79. The ratio of the number of grooves 77-79 to the number of transverse channels 73 is on the order of the aspect ratio of the reactant gas flow field transverse area 74. In the embodiment of Fig. 6, the ratio of the length, L, of the transverse area 74 (from right to left in Fig. 6) to the width, W, of the transverse area 74 (from the top to the bottom as shown in Fig. 6) is about 1.4. In the embodiment of Fig. 6, there are approximately 16 grooves 77-79 per 11 transverse channels 73, which is a ratio of grooves to channels of 1.4. Thus, the ratio of transverse grooves to transverse channels in the embodiment of Figs. 6 and 7 is about the same as the aspect ratio of the transverse area 74.

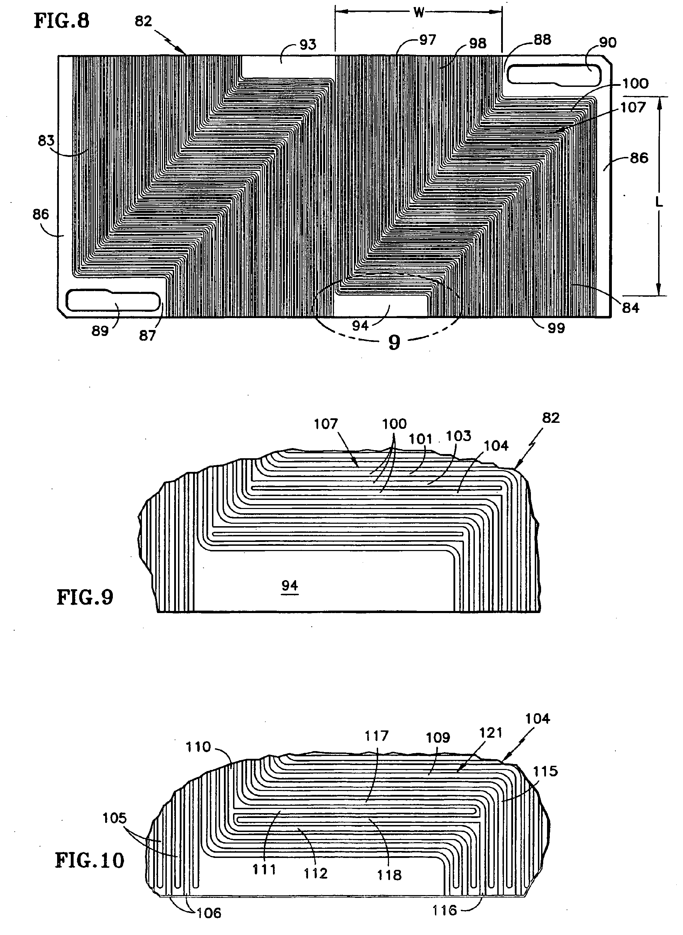

Referring to Fig. 8, a flow field plate 82 has two separate flow fields 83, 84, each of which is within the purview of the invention, and only one of which will be discussed.

A reactant gas inlet manifold would be at either the top or bottom (as seen in Fig. 8) of the flow field plate 82, and a reactant gas outlet manifold would be at either the bottom or the top of the flow field plate 82. Or, there may be an inlet/outlet manifold at the top or bottom and a turn manifold at the bottom or top. These have been omitted in Fig. 8 for clarity.

In Fig. 8, there are seal areas 86 along the edges of the flow field plate, and seal areas 87, 88 around internal manifold holes 89, 90. In Fig. 8, there are two areas 93, 94 which do not have reactant gas flow field channels thereon; however, when these are placed on opposite sides of an electrolyte with a flow field plate similar to Fig. 6, the areas 93, 94 will substantially overlay the seal areas 54 of the opposite plate (e.g., Fig. 6), which areas are not active anyway. Therefore, the areas 93 and 94 in Fig. 8 are not wasted.

In Fig. 8, the inlet (or outlet) ends 97 of the flow channels 98 are offset from the other ends 99 thereof by means of transverse portions 100 of the flow channels. In Fig. 9, the transverse portions 100 of the flow channels may have either one groove 101 or two grooves 103, 104. In Figs. 8 and 9, there are five grooves for each four transverse channel portions, giving a ratio of 1.25. In Fig. 8, the ratio of the length, L, of the transverse area 107 (from top to bottom) is about 1.24 times the width, W, of the reactant gas flow field transverse area 107 (from right to left in Fig. 8). Thus, the ratio of grooves to transverse channels is about the same as the aspect ratio of the transverse area 107.

Referring to Fig. 10, an interdigitated reactant gas flow field plate 104 has a plurality of inlet grooves 105, which are open at the inlet end to receive gas, but are blocked at the outlet end. The plate 104 also has a plurality of outlet grooves 106, from which the gas can freely flow at the outlet, but which are blocked at the inlet. As is known, this forces the gas to pass into the bulk of the plate material in order to advance from the inlet to the outlet, thus providing an increased capacity for the gas to react at the catalyst.

In Fig. 10, some of the inlet channels, such as channel 109, have only one groove in the transverse portion thereof. But, some of the inlet channels such as the inlet channel 110 have two transverse grooves 111, 112 therein. Similarly, some of the outlet channels, such as the channel 115 have only a single transverse groove, while some of the outlet channels, such as the outlet channel 116 have two grooves 117, 118 in the transverse channel. As in the other embodiments, the ratio of the total number of grooves in the transverse channels to the number of transverse channels is on the order of the aspect ratio of the reactant gas flow field transverse area 121.

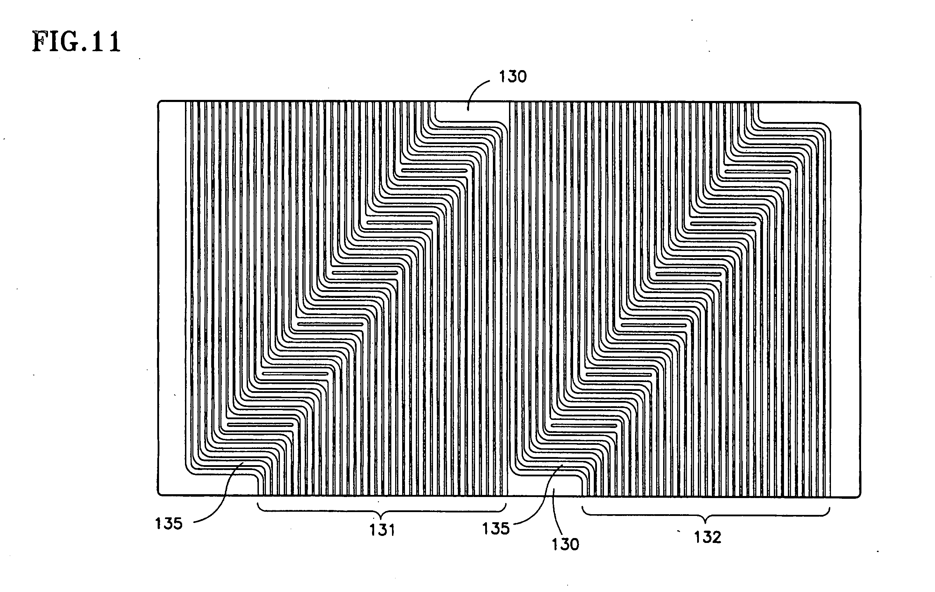

Fig. 11 illustrates a flow field plate 129 having areas 130 which separate inlet flow fields 131 from outlet flow fields 132. There are six grooves per five transverse channels 135 (6/5 = 1.2) and the aspect ratio is about 1.22.

The invention may be used in flow field plates in which the grooves are of uniform or variable width and are of uniform or variable depth.

## Claims

1. A fuel cell reactant gas flow field plate (53, 82, 104) for inclusion in a stack of fuel cells to form a fuel cell power plant, said plate having a plurality of grooves forming reactant gas flow channels (71), said channels having inlet ends and outlet ends for conducting reactant gas along a longitudinal flow direction extending between said inlet ends and said outlet ends;
said flow field plate having a flow inlet edge (61) and a flow outlet edge (62), each of said channels including either or both of (a) an inlet portion extending longitudinally from, at or near said inlet edge and (b) an outlet portion extending longitudinally from, at or near said outlet edge, each of said channels having a transverse portion (73) extending substantially transversely of said longitudinal direction and in fluid communication either (c) with only one of said inlet portions or only one of said outlet portions, or (d) between one of said inlet portions and one of said outlet portions, so that said inlet portions are laterally offset from said outlet portions;
**characterized in that**
some (78, 79; 103, 104; 111, 112; 117, 118), but less than all (77; 109, 115) of said transverse portions have more than one groove, and
all of said transverse portions together form a transverse flow field area having a length in said longitudinal direction and a width transverse of said longitudinal direction, and a ratio of the number of grooves in said transverse flow field area to the number of transverse channel portions in said transverse flow field area is on the order of an aspect ratio of the length or width of said transverse flow field area to the width or length of said transverse flow field area.

2. A flow field plate according to claim 1 wherein:
said channels are flow-through channels and each of said transverse portions is in fluid communication between one of said inlet portions and one of said outlet portions.

3. A flow field plate according to claim 1 wherein:
said channels are interdigitated and each of said transverse portions includes at least one groove in fluid communication between (a) a first part (110) of one inlet portion and a second part (111, 112) of said one inlet portion which is transverse from said first part of said one inlet portion or (b) a first part (116) of one outlet portion and a second part (117, 118) of said one outlet portion which is transverse to said first part of said one outlet portion.

4. A flow field plate according to claim 3 wherein:
some of said transverse portions include at least one groove which is in fluid communication with only one part of either (a) one of said inlet portions (111, 112) or (b) one of said outlet portions (117, 118).

5. A flow field plate according to claim 1 wherein:
less than all of said transverse portions have more than one groove.

6. A flow field plate according to claim 1 wherein:
some of said transverse portions have two grooves.

7. A flow field plate according to claim 1 wherein:
none of said transverse portions have more than two grooves.

8. A flow field plate according to claim 1 wherein:
said plate has at least one hole (53, 58, 89, 90) therein; each hole for forming, with similar holes of additional plates, an internal manifold, each hole having two dimensions which are at least several times said groove width; and
said inlet portions are offset from said outlet portions to clear said holes.

## Patentansprüche

1. Brennstoffzellen-Reaktionsmittelgas-Strömungsfeldplatte (53, 82, 104) zur Einbeziehung in einen Stapel von Brennstoffzellen zur Ausbildung eines Brennstoffzellen-Stromerzeugers, wobei die Platte eine Mehrzahl von Rillen hat, die Reaktionsmittelgas-Strömungskanäle (71) bilden, wobei die Kanäle Einlassenden und Auslassenden zum Leiten von Reaktionsmittelgas entlang einer längsgerichteten Strömungsrichtung, die sich zwischen den Einlassenden und den Auslassenden erstreckt, haben;
wobei die Strömungsfeldplatte einen Strömungseinlassrand (61) und einen Strömungsauslassrand (62) hat, wobei jeder der Kanäle entweder (a) einen Einlassbereich, der sich in Längsrichtung von, an oder nahe an dem Einlassrand erstreckt, oder (b) einen Auslassbereich, der sich in Längsrichtung von, an oder nahe an dem Auslassrand erstreckt, oder beide umfasst, wobei jeder der Kanäle einen Querbereich (73) hat, der sich im wesentlichen quer zu der Längsrichtung und in Fluidverbindung entweder (c) mit nur einem der Einlassbereiche oder nur einem der Auslassbereiche oder (d) zwischen einem der Einlassbereiche und einem der Auslassbereiche erstreckt, so dass die Einlassbereiche gegenüber den Auslassbereichen seitlich versetzt sind;
**dadurch gekennzeichnet, dass**
einige (78, 79; 103, 104; 111, 112; 117, 118), aber weniger als alle (77; 109, 115) der Querbereiche mehr als eine Rille haben, und alle der Querbereiche zusammen eine Querströmungsfeldzone mit einer Länge in der Längsrichtung und einer Breite quer zu der Längsrichtung bilden, und ein Verhältnis der Anzahl von Rillen in der Querströmungsfeldzone zu der Anzahl von Querkanalbereichen in der Querströmungsfeldzone in der Größenordnung eines Länge-Breite-Verhältnisses der Länge oder Breite der Querströmungsfeldzone zur Breite oder Länge der Querströmungsfeldzone ist.

2. Strömungsfeldplatte nach Anspruch 1, bei der:
die Kanäle Durchflusskanäle sind, und jeder der Querbereiche in Fluidverbindung zwischen einem der Einlassbereiche und einem der Auslassbereiche ist.

3. Strömungsfeldplatte nach Anspruch 1, bei der:
die Kanäle ineinandergreifend sind, und jeder der Querbereiche mindestens eine Rille in Fluidverbindung zwischen (a) einem ersten Teil (110) eines Einlassbereichs und einem zweiten Teil (111, 112) des einen Einlassbereichs, der zu dem ersten Teil des einen Einlassbereichs quer ist, oder (b) einem ersten Teil (116) eines Auslassbereichs und einem zweiten Teil (117, 118) des einen Auslassbereichs, der zu dem ersten Teil des einen Auslassbereichs quer ist, umfasst.

4. Strömungsfeldplatte nach Anspruch 3, bei der:
einige der Querbereiche mindestens eine Rille umfassen, die in Fluidverbindung mit nur einem Teil entweder (a) eines der Einlassbereiche (111, 112) oder (b) eines der Auslassbereiche (117, 118) ist.

5. Strömungsfeldplatte nach Anspruch 1, bei der:
weniger als alle der Querbereiche mehr als eine Rille haben.

6. Strömungsfeldplatte nach Anspruch 1, bei der:
einige der Querbereiche zwei Rillen haben.

7. Strömungsfeldplatte nach Anspruch 1, bei der:
keiner der Querbereiche mehr als zwei Rillen hat.

8. Strömungsfeldplatte nach Anspruch 1, bei der:
die Platte mindestens ein Loch (53, 58, 89, 90) darin hat; wobei jedes Loch, mit ähnlichen Löchern zusätzlicher Platten, zur Ausbildung eines internen Sammlers/Verteilers ist, wobei jedes Loch zwei Abmessungen hat, die mindestens ein Mehrfaches der Rillenbreite sind; und
die Einlassbereiche gegenüber den Auslassbereichen versetzt sind, damit die Löcher frei sind.

## Revendications

1. Plaque de champs de flux de gaz réactif de piles à combustible (53, 82, 104) pour l'inclusion dans un empilement de piles à combustible pour former une centrale électrique de piles à combustible, ladite plaque ayant une pluralité de rainures formant des canaux de flux de gaz réactif (71), lesdits canaux ayant des extrémités d'entrée et des extrémités de sortie pour acheminer du gaz réactif suivant une direction de flux longitudinale s'étendant entre lesdites extrémités d'entrée et lesdites extrémités de sortie ;
ladite plaque de champs de flux ayant un bord d'entrée de flux (61) et un bord de sortie de flux (62), chacun desdits canaux comprenant l'une ou l'autre ou les deux de (a) une portion d'entrée s'étendant longitudinalement à partir, au niveau ou près dudit bord d'entrée et (b) une portion de sortie s'étendant longitudinalement à partir, au niveau ou près dudit bord de sortie, chacun desdits canaux ayant une portion transversale (73) s'étendant sensiblement transversalement à ladite direction longitudinale et en communication de fluide (c) avec seulement une desdites portions d'entrée ou seulement une desdites portions de sortie, ou (d) entre une desdites portions d'entrée et une desdites portions de sortie, de manière que lesdites portions d'entrée soient décalées latéralement par rapport auxdites portions de sortie ; **caractérisée en ce que**
certaines (78, 79 ; 103, 104 ; 111, 112 ; 117, 118), mais moins que la totalité (77 ; 109, 115) desdites portions transversales ont plus d'une rainure, et
toutes lesdites portions transversales forment ensemble une zone de champ de flux transversale ayant une longueur dans ladite direction longitudinale et une largeur transversale à ladite direction longitudinale, et un rapport du nombre de rainures dans ladite zone de champ de flux transversal et du nombre de portions de canal transversales dans ladite zone de champ de flux transversale est de l'ordre d'un rapport de dimension de la longueur ou la largeur de ladite zone de champ de flux transversale et de la largeur ou la longueur de ladite zone de champ de flux transversale.

2. Plaque de champs de flux selon la revendication 1, dans laquelle :
lesdits canaux sont des canaux de passage de flux et chacune desdites portions transversales est en communication de fluide entre une desdites portions d'entrée et une desdites portions de sortie.

3. Plaque de champs de flux selon la revendication 1, dans laquelle :
lesdits canaux sont interdigités et chacune desdites portions transversales comprend au moins une rainure en communication de fluide entre (a) une première partie (110) d'une portion d'entrée et une deuxième partie (111, 112) de ladite une portion d'entrée qui est transversale à partir de ladite première partie de ladite une portion d'entrée ou (b) une première partie (116) d'une portion de sortie et une deuxième partie (117, 118) de ladite une portion de sortie qui est transversale vers ladite première partie de ladite une portion de sortie.

4. Plaque de champs de flux selon la revendication 3, dans laquelle :
certaines desdites portions transversales comprennent au moins une rainure qui est en communication de fluide avec seulement une partie de (a) une desdites portions d'entrée (111, 112) ou (b) une desdites portions de sortie (117, 118).

5. Plaque de champs de flux selon la revendication 1, dans laquelle :
moins de la totalité desdites portions transversales comportent plus d'une rainure.

6. Plaque de champs de flux selon la revendication 1, dans laquelle :
certaines desdites portions transversales comportent deux rainures.

7. Plaque de champs de flux selon la revendication 1, dans laquelle :
aucune desdites portions transversales ne comporte plus de deux rainures.

8. Plaque de champs de flux selon la revendication 1, dans laquelle :
ladite plaque comporte au moins un trou (53, 58, 89, 90) dans celle-ci ; chaque trou étant destiné à former, avec des trous similaires de plaques additionnelles un collecteur interne, chaque trou ayant deux dimensions qui sont au moins plusieurs fois ladite largeur de rainure ; et
lesdites portions d'entrée sont décalées par rapport auxdites portions de sortie pour libérer lesdits trous.
